# EUROPÄISCHE PATENTSCHRIFT

(11) **EP 2 533 927 B1**
(45) Veröffentlichungstag und Bekanntmachung des Hinweises auf die Patenterteilung: **30.09.2015**
(21) Anmeldenummer: 11718012.5
(22) Anmeldetag: 28.04.2011
(51) Int. Cl.: B23D 27/00, B23D 36/00

(54) **STANZ- UND/ODER NIBBELMASCHINE SOWIE VERFAHREN ZUM ANSTEUERN EINER STANZ- UND/ODER NIBBELMASCHINE**
PUNCHING AND/OR NIBBLING MACHINE, AND METHOD FOR CONTROLLING A PUNCHING AND/OR NIBBLING MACHINE
MACHINE À ESTAMPER ET/OU À GRIGNOTER ET PROCÉDÉ DE COMMANDE D'UNE MACHINE À ESTAMPER ET/OU À GRIGNOTER

(43) Veröffentlichungstag der Anmeldung: 19.12.2012
(73) Patentinhaber: Voith Patent GmbH, 89522 Heidenheim (DE)
(72) Erfinder: BRAHMER, Bert, 76646 Bruchsal (DE)
(74) Vertreter: DREISS Patentanwälte PartG mbB
(86) Internationale Anmeldenummer: PCT/EP2011/056744
(87) Internationale Veröffentlichungsnummer: WO 2012/146286

(56) Entgegenhaltungen:
- US-A- 4 674 373

## Beschreibung

Die Erfindung betrifft eine Stanz- und/oder Nibbelmaschine gemäß dem Oberbegriff des Anspruchs 1, mit einem z-Achs-Antrieb zum Antreiben eines in vertikaler Richtung bewegbaren, von einer Werkzeugaufnahme aufnehmbaren Werkzeugs zur Bearbeitung von Blechwerkstücken. Die Erfindung betrifft auch ein Verfahren zur Ansteuerung einer solchen Stanz- und/oder Nibbelmaschine gemäß dem Oberbegriff des Anspruchs 8.

Eine derartige Maschine geht aus einem dem Anmelder bekannten Stand der Technik herror. Ein derartiges Verfahren geht beispielsweise aus der US 4 674 373 A herror. Derartige Maschinen weisen in der Regel eine CNC-Steuerung zur Ansteuerung des Z-Achs-Antriebs auf. Diese CNC-Steuerung kann eine Schnittstelle für einen Datenkanal zu einer übergeordneten Steuerung, insbesondere einer PLC-Steuerung, oder zu einer weiteren CNC-Steuerung eines X/Y-Achs-Antriebs vorsehen. Mit dem X/Y-Achs-Antrieb werden die zu bearbeitenden Blechwerkstücke relativ zum Werkzeug in horizontalen Richtungen, den X/Y-Achsen bewegt. Die Blechwerkstücke können dabei insbesondere in einer horizontalen Ebene bewegt werden. Denkbar ist auch, dass die zu bearbeitenden Blechwerkstücke bandartig ausgebildet sind und von einem Coil abgerollt werden. Der X-Achs-Antrieb kann dann beispielsweise den Werkstückvorschub bewirken, während der Y-Achs-Antrieb dann beispielsweise quer zum Bandvorschub das Werkzeug über dem Werkstück bewegt. Die Werkzeugaufnahme kann dabei während einer vertikalen Bewegung beim Bearbeiten der Blechwerkstücke von einem C-Antrieb um ihre vertikale Längsachse verdreht werden. Bekannt ist, hierzu die weitere CNC-Steuerung vorzusehen, die neben den X/Y-Achsantrieben auch den C-Antrieb ansteuert.

Je nach Ausführung der Maschine kann zudem ein T-Antrieb vorgesehen sein, der zur Auswahl eines von mehreren Werkzeugen aus einem Werkzeugmagazin oder Werkzeugrevolver dient.

Bei vorbekannten Maschinen ist, wie bereits erwähnt, die CNC-Steuerung des Z-Achs-Antriebs separat von der weiteren CNC-Steuerung des X/Y-Achs-Antriebs, des C-Antriebs und gegebenenfalls des T-Antriebs ausgebildet. Dies hängt damit zusammen, dass für den Z-Achs-Antrieb regelmäßig eine andere Antriebstechnik verwendet wird als für die restlichen Antriebe. Der Z-Achs-Antrieb wird in der Regel von hydraulisch oder pneumatisch beaufschlagbaren Presskolben gebildet, die eine vergleichsweise hohe Stanzkraft im Bereich von beispielsweise 150 bis 350 kN vorsehen. Um ein zeitliches abgestimmtes Ansteuern des Z-Achs-Antriebs mit den anderen Antrieben zu ermöglichen, ist es bekannt, zwischen den beiden CNC-Steuerungen einen Datenkanal, beispielsweise einen Feldbus, vorzusehen. Über diesen Datenkanal wird beispielsweise die CNC-Steuerung für den Z-Achs-Antrieb mit Parametern, wie beispielsweise Daten für den oberen Totpunkt und den unteren Totpunkt eines Stanzhubes oder der Position für einen Werkzeugwechsel, versorgt. Während der Bearbeitung des Blechwerkstücks findet dabei in der Regel die Koordination im Wesentlichen über diskrete Start-und Quittungssignale, die meist in Form von Digitalsignalen vorliegen, statt. Ein Austausch von Positionsdaten in Echtzeit um eine Achs-Synchronisierung bereitzustellen, findet nicht statt.

Je nach Art des zu verwendeten Werkzeuges kann es erforderlich sein, dass das Werkzeug während der Bearbeitung entlang seiner Längsachse verdreht werden muss. Insbesondere dann, wenn es sich bei dem Werkzeug um einen Gewindeschneider handelt, ist dieser während der Abwärtsbewegung beispielsweise nach rechts zu verdrehen und bei der Aufwärtsbewegung wieder zurück nach links. Der Einsatz derartiger Werkzeuge erfordert also eine synchronisierte Bewegung der C-Achse und der Z-Achse.

In dem Fall, in dem der C-Achs-Antrieb und der Z-Achs-Antrieb von einer gemeinsamen CNC-Steuerung angesteuert werden, ist eine derartige Synchronisierung ohne Weiteres möglich. Wie eingangs beschrieben, ist allerdings bei der Mehrzahl der Stanz- und/oder Nibbelmaschinen vorgesehen, dass zwei getrennte CNC-Steuerungen vorgesehen sind, eine CNC-Steuerung für die Z-Achse und eine CNC-Steuerung für die X/Y-Achse, die C-Achse und gegebenenfalls die T-Achse. In einem derartigen Fall ist vorzusehen, dass die CNC-Steuerung der X/Y-Achse über eine geeignete Schnittstelle die Position der C-Achse in Echtzeit an die CNC-Steuerung der Z-Achse überträgt. Die CNC-Steuerung der Z-Achse kann dann selbstständig den Z-Sollwert aus dem C-Istwert errechnen. Ebenfalls denkbar ist, dass die CNC-Steuerung der X/Y-Achse direkt den notwendigen Z-Sollwert errechnet und an die CNC-Steuerung der Z-Achse überträgt. In beiden erwähnten Fällen ist allerdings eine echtzeitfähige Schnittstelle bei beiden CNC-Steuerungen vorzusehen. Eine echtzeitfähige Schnittstelle zeichnet sich dadurch aus, dass die Positionswerte isochron, also mit gleichen Zeitabständen, und mit hinreichend kleinem zeitlichen Abstand, im Bereich von wenigen Millisekunden beziehungsweise Bruchteile von Millisekunden, übertragen werden. In der Regel kann eine derartige, wünschenswerte Schnittstelle nicht hergestellt werden, da die beiden separaten CNC-Steuerungen in der Regel technischen Einschränkungen unterliegen öder nicht die geeigneten Schnittstellen, insbesondere aufgrund unterschiedlicher Hersteller, aufweisen.

Der vorliegenden Erfindung liegt deshalb die Aufgabe zugrunde, eine Stanz- oder Nibbelmaschine bereitzustellen, bei der eine synchrone Bewegung von Z-Achse und C-Achse auf einfache Art und Weise zur Verfügung steht.

Diese Aufgabe wird durch eine Stanz- und/oder Nibbelmaschine mit den Merkmalen des Anspruchs 1 gelöst. Eine derartige Maschine sieht folglich vor, dass ein Winkelsensor zur Erfassung der Winkelinformation des C-Antriebs vorgesehen ist, und die CNC-Steuerung des Z-Achs-Antriebs derart ausgebildet ist, dass sie aus der Winkelinformation einen Z-Sollwert als Führungsgröße des Z-Achs-Antriebs bestimmt. Durch Vorsehen eines zusätzlichen Winkelsensors am C-Antrieb kann folglich auf die jeweilige Lage des C-Antriebs beziehungsweise des Werkzeugträgers, und damit des Werkzeugs, in Echtzeit zurückgegriffen werden, ohne dass hierzu Daten aus der weiteren CNC-Steuerung zu verwenden sind. Insofern ist es möglich, den Z-Achs-Antrieb und den C-Antrieb im Interpolationsbetrieb, also synchron, zu betreiben. Wie bereits erwähnt, ist ein besonderer Vorteil der Erfindung, dass hierzu nicht auf Daten der weiteren CNC-Steuerung, die den X/Y-Achs-Antrieb ansteuert, zurückgegriffen werden muss. Der Z-Sollwert kann folglich von der CNC-Steuerung des Z-Achsantriebs in Echtzeit aus der Winkelinformation berechnet werden.

Bei dem Winkelsensor kann es sich beispielsweise um einen inkrementell arbeitenden Drehwinkelsensor handeln, der den jeweiligen Drehwinkel des C-Antriebs erfasst.

Dabei ist denkbar, dass der C-Antrieb einen Motor, einen Triebstrang, ein Getriebe und/oder eine drehbare Werkzeugaufnahme aufweist, wobei der Winkelsensor am Motor, am Triebstrang, am Getriebe oder an der drehbaren Werkzeugaufnahme angeordnet sein kann. Je nach Lage des Winkelsensors kann aus der erfassten Winkelinformation auf die jeweilige Drehlage des Werkzeugs, beispielsweise eines Gewindeschneiders, rückgeschlossen werden.

Dabei ist denkbar, dass die CNC-Steuerung derart ausgebildet ist, dass sie den Z-Sollwert über eine lineare Transformation und eine vorzugebenden Steigung oder eine nichtlineare Transformation und eine entsprechende Rechenvorschrift oder Tabellen bestimmt. Insbesondere dann, wenn mit dem Werkzeug Gewinde geschnitten werden, findet eine lineare Transformation unter Berücksichtigung der vorzusehenden Steigung des Gewindes statt.

Die Maschine kann, wie bereits erwähnt, einen X/Y-Achs-Antrieb zum Bewegen der Blechwerkstücke relativ zum Werkzeug in horizontalen Richtungen sowie die weitere CNC-Steuerung des X/Y-Achs-Antriebs umfassen. Zu berücksichtigen ist dabei, dass die Erfindung sich auch auf Stanz- und/oder Nibbelmaschinen bezieht, welche einen derartigen X/Y-Achs-Antrieb gerade nicht umfassen, die aber dazu vorgesehen sind, mit einem derartigen X/Y-Achs-Antrieb zusammenzuwirken.

Wie ebenfalls eingangs erwähnt, ist denkbar, dass ein von der weiteren CNC-Steuerung ansteuerbarer T-Achs-Antrieb zur Auswahl eines von mehreren Werkzeugen aus einem Werkzeugmagazin oder -revolver vorgesehen ist. Eine derartige Ausbildung hat den Vorteil, dass die Erfindung auch dann Anwendung finden kann, wenn Werkzeugmagazine oder Werkzeugrevolver vorgesehen sind.

Die der Erfindung zugrunde liegende Aufgabe wird auch durch ein Verfahren mit den Merkmalen des Anspruchs 8 gelöst. Das Verfahren dient zum Ansteuern einer Stanz- und/oder Nibbelmaschine, insbesondere einer erfindungsgemäßen Maschine, bei dem ein Z-Achs-Antrieb zum Antreiben eines in vertikaler Richtung bewegbaren, von einer Werkzeugaufnahme aufnehmbaren Werkzeugs zur Bearbeitung von Blechwerkstücken angesteuert wird, und die Werkzeugaufnahme dabei von einem C-Antrieb um ihre vertikale Längsachse verdreht wird. Das Verfahren zeichnet sich dadurch aus, dass die Ansteuerung des Z-Achs-Antriebs in Abhängigkeit von einer Winkelinformation des C-Antriebs erfolgt. Dabei ist insbesondere vorgesehen, dass aus der Winkelinformation ein Z-Sollwert als Führungsgröße des Z-Achs-Antriebs bestimmt wird.

Die Winkelinformation wird dabei insbesondere von einem am C-Antrieb vorgesehenen Winkelsensor erfasst. Die Ansteuerung des Z-Achs-Antriebs kann dabei, wie eingangs beschrieben, über eine CNC-Steuerung erfolgen und die Winkelinformation eine Eingangsgröße der CNC-Steuerung bilden.

Ebenfalls wie eingangs erwähnt, ist denkbar, dass die Ansteuerung des C-Antriebs über eine weitere CNC-Steuerung erfolgt, die auch einen X/Y-Antrieb zum Bewegen der Blechwerkstücke relativ zum Werkzeug in horizontalen Richtungen ansteuert.

Ferner kann gemäß dem erfindungsgemäßen Verfahren vorgesehen sein, dass ein Datenaustausch zwischen der CNC-Steuerung und der weiteren CNC-Steuerung vorgesehen ist. Wie ebenfalls schon angesprochen, ist denkbar, dass die CNC-Steuerung den Z-Sollwert über eine lineare oder eine nichtlineare Transformation der Winkelinformation und einer vorzusehenden Steigung bestimmt.

Weitere Vorteile und vorteilhafte Ausgestaltungen der Erfindung sind der folgenden Beschreibung zu entnehmen, anhand derer ein Ausführungsbeispiel der Erfindung näher beschrieben und erläutert wird.

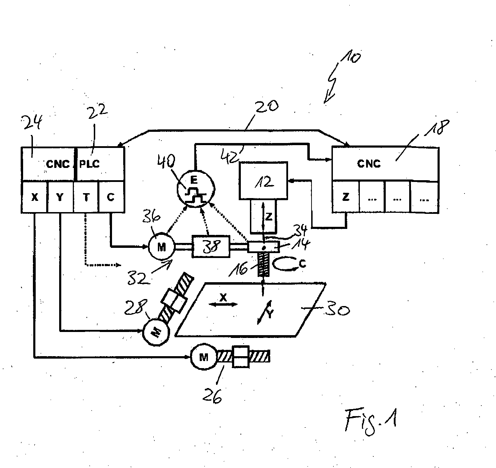

In der Figur ist eine erfindungsgemäße Stanz-Maschine 10 dargestellt. Die Stanzmaschine 10 umfasst einen Z-Achs-Antrieb 12 zum Antreiben eines in vertikaler Richtung bewegbaren, von einer Werkzeugaufnahme 14 aufnehmbaren Werkzeuges 16. Der Z-Achs-Antrieb 12 wird dabei von einer CNC-Steuerung 18 angesteuert. Die CNC-Steuerung 18 kann dabei so ausgebildet sein, dass sie noch weitere Antriebe ansteuert. Die CNC-Steuerung 18 ist über einen Datenkanal 20 mit einer übergeordneten PLC-Steuerung 22 verbunden. Die PLC-Steuerung 22 ist ihrerseits mit einer weiteren CNC-Steuerung 24 verbunden. Bei dem in der Figur 1 dargestellten Ausführungsbeispiel sind die weitere CNC-Steuerung 24 und die PLC-Steuerung 22 in einem Gehäuse untergebracht.

Die weitere CNC-Steuerung 24 dient zur Ansteuerung eines X-Achs-Antriebs 26 sowie eines Y-Achs-Antriebs 28. Mit diesen beiden Antrieben 26 und 28 wird das zu bearbeitende Blechstück 30 in einer horizontalen Ebene in X- und Y-Richtung entsprechend unter dem Z-Achs-Antrieb 12, beziehungsweise des zugehörigen Werkstücks 16, positioniert. Die weitere CNC-Steuerung 24 dient ferner zur Ansteuerung eines C-Antriebs 32, mit dem der Werkzeughalter 14, beziehungsweise das Werkzeug 16, um ihre vertikale Längsachse verdreht werden können. Der C-Antrieb 32 umfasst dabei insbesondere einen Motor 36 und einen Triebstrang 38.

Am C-Antrieb, insbesondere am Motor 36, am Triebstrang 38 oder an der Werkzeugaufnahme 14, ist ein Winkelsensor 40 angeordnet, der Winkelinformationen des C-Antriebs 32 erfasst. Über eine Datenleitung 42 werden diese Informationen der CNC-Steuerung 18 zugeführt. Die CNC-Steuerung 18 bestimmt aus den Winkelinformationen den Z-Sollwert als Führungsgröße des Z-Achs-Antriebs in Echtzeit. Die Ansteuerung des Z-Achs-Antriebs 12 erfolgt folglich in Abhängigkeit der Winkelinformationen des C-Antriebs 32.

Durch Vorsehen des Winkelsensors 40 am C-Antrieb 32 und der Übermittlung der Winkelinformationen an die CNC-Steuerung 18 kann eine synchrone Bewegung der C-Achse und der Z-Achse auf einfache Art und Weise erreicht werden, ohne dass hierzu Informationen aus der weiteren CNC-Steuerung 24 beziehungsweise der PLC-Steuerung 22 erforderlich wären. Insofern kann ein autarkes System bereitgestellt werden, mit dem die Z-Achse in Abhängigkeit von der jeweiligen Drehlage des C-Antriebs 32 beziehungsweise der Werkzeugaufnahme 14 oder des Werkzeugs 16 bereitgestellt werden.

## Patentansprüche

1. Stanz- und/oder Nibbelmaschine (10), mit einem Z-Achs-Antrieb (12) zum Antreiben eines in vertikaler Richtung bewegbaren, von einer Werkzeugaufnahme (14) aufnehmbaren Werkzeugs (16) zur Bearbeitung von Blechwerkstücken (30), mit einer CNC-Steuerung (18) zur Ansteuerung des z-Achs-Antriebs (12), wobei die Werkzeugaufnahme (14) während einer vertikalen Bewegung beim Bearbeiten von Blechwerkstücken (30) von einem von einer weiteren CNC-Steuerung (24) angesteuerten C-Antrieb (36) um ihre vertikale Längsachse (34) verdrehbar ist, **dadurch gekennzeichnet, dass** ein Winkelsensor (40) zur Erfassung der Winkelinformation des C-Antriebs (32) vorgesehen ist und die CNC-Steuerung (18) derart ausgebildet ist, dass sie aus der Winkelinformation einen Z-Sollwert als Führungsgröße des Z-Achs-Antriebs (12) bestimmt.

2. Maschine (10) nach Anspruch 1, **dadurch gekennzeichnet, dass** der C-Antrieb einen Motor (36), einen Triebstrang (38), ein Getriebe und/oder die drehbare Werkzeugaufnahme (14) aufweist, wobei der Winkelsensor (40) am Motor (36), am Triebstrang (38), am Getriebe oder an der drehbaren Werkzeugaufnahme (14) angeordnet ist.

3. Maschine (10) nach Anspruch 1 oder 2, **dadurch gekennzeichnet, dass** die CNC-Steuerung (18) derart ausgebildet ist, dass sie den Z-Sollwert über eine lineare oder eine nichtlineare Transformation der Winkelinformation bestimmt.

4. Maschine (10) nach einem der vorherigen Ansprüche, **dadurch gekennzeichnet, dass** die CNC-Steuerung (18) eine Schnittstelle zu einer übergeordneten Steuerung (22) oder zu der weiteren CNC-Steuerung (24) aufweist.

5. Maschine (10) nach einem der vorherigen Ansprüche, **dadurch gekennzeichnet, dass** die weitere Steuerung (24) auch zur Ansteuerung eines X/Y-Achs-Antriebs (26, 28) zum Bewegen der Blechwerkstücke (30) relativ zum Werkzeug (16) in horizontalen Richtungen (X, Y) vorgesehen ist.

6. Maschine (10) nach einem der vorherigen Ansprüche, **dadurch gekennzeichnet, dass** sie den X/Y-Achs-Antrieb (26, 28) sowie die weitere CNC-Steuerung (24) umfasst.

7. Maschine (10) nach einem der vorherigen Ansprüche, **dadurch gekennzeichnet, dass** ein von der weiteren CNC-Steuerung (24) ansteuerbarer T-Achs-Antrieb zur Auswahl eines von mehreren Werkzeugen aus einem Werkzeugmagazin oder -revolver vorgesehen ist.

8. Verfahren zum Ansteuern einer Stanz- und/oder Nibbelmaschine (10), insbesondere einer Maschine nach einem der vorherigen Ansprüche, bei dem ein Z-Achs-Antrieb (12) zum Antreiben eines in vertikaler Richtung bewegbaren, von einer Werkzeugaufnahme (14) aufnehmbaren Werkzeugs (16) zur Bearbeitung von Blechwerkstücken (30) angesteuert wird und die Werkzeugaufnahme (14) dabei von einem C-Antrieb (32) um ihre vertikale Längsachse verdreht wird, **dadurch gekennzeichnet, dass** die Ansteuerung des Z-Achs-Antriebs (12) in Abhängigkeit einer Winkelinformation des C-Antriebs (32) erfolgt.

9. Verfahren nach Anspruch 8, **dadurch gekennzeichnet, dass** aus der Winkelinformation ein Z-Sollwert als Führungsgröße des Z-Achs-Antriebs bestimmt wird.

10. Verfahren nach Anspruch 8 oder 9, **dadurch gekennzeichnet, dass** die Winkelinformation von einem am C-Antrieb (32) vorgesehenen Winkelsensor (40) erfasst wird.

11. Verfahren nach Anspruch 8, 9 oder 10, **dadurch gekennzeichnet, dass** die Ansteuerung des Z-Achs-Antriebs (12) über eine CNC-Steuerung (18) erfolgt und die Winkelinformation eine Eingangsgröße der CNC-Steuerung (18) bildet.

12. Verfahren nach einem der Ansprüche 8 bis 11, **dadurch gekennzeichnet, dass** die Ansteuerung des C-Antriebs (32) über eine weitere CNC-Steuerung (24) erfolgt, die auch einen X/Y-Achs-Antrieb (26, 28) zum Bewegen der Blechwerkstücke (30) relativ zum Werkzeug (16) in horizontalen Richtungen ansteuert.

13. Verfahren nach einem der Ansprüche 8 bis 12, **dadurch gekennzeichnet, dass** ein Datenaustausch zwischen der CNC-Steuerung (18) und der weiteren CNC-Steuerung (24) erfolgt.

14. Verfahren nach einem der Ansprüche 9 bis 13, **dadurch gekennzeichnet, dass** die CNC-Steuerung (18) den Z-Sollwert über eine lineare oder eine nichtlineare Transformation der Winkelinformation bestimmt.

## Claims

1. Stamping and/or nibbling machine (10), with a Z-axis drive (12) for driving a tool (16), which is movable in the vertical direction and can be held by a tool holder (14), for the machining of sheet metal workpieces (30), with a CNC control unit (18) for actuating the Z-axis drive (12), wherein the tool holder (14), during a vertical movement during the machining of sheet metal workpieces (30), is rotatable around its vertical longitudinal axis (34) by a C-drive (36) which is actuated by an additional CNC control unit (24), **characterized in that** an angle sensor (40) is provided for detecting the angle information of the C-drive (32) and the CNC control unit (18) is designed in such a way that from the angle information it determines a Z-setpoint value as a reference variable of the Z-axis drive (12).

2. Machine (10) according to Claim 1, **characterized in that** the C-drive has a motor (36), a drive train (38), a transmission and/or the rotatable tool holder (14), wherein the angle sensor (40) is arranged on the motor (36), on the drive train (38), on the transmission or on the rotatable tool holder (14).

3. Machine (10) according to Claim 1 or 2, **characterized in that** the CNC control unit (18) is designed in such a way that it determines the Z-setpoint value via a linear or a non-linear transformation of the angle information.

4. Machine (10) according to one of the preceding claims, **characterized in that** the CNC control unit (18) has an interface to a primary control unit (22) or to the additional CNC control unit (24).

5. Machine (10) according to one of the preceding claims, **characterized in that** the additional CNC control unit (24) is also provided for actuating an X/Y-axis drive (26, 28) for moving the sheet metal workpieces (30) relative to the tool (16) in horizontal directions (X, Y).

6. Machine (10) according to one of the preceding claims, **characterized in that** it comprises the X/Y-axis drive (26, 28) and also the additional CNC control unit (24).

7. Machine (10) according to one of the preceding claims, **characterized in that** a T-axis drive, which can be actuated by the additional CNC control unit (24), is provided for the selection of one of a plurality of tools from a tool magazine or tool turret.

8. Method for actuating a stamping and/or nibbling machine (10), especially a machine according to one of the preceding claims, in which a Z-axis drive (12) is actuated for driving a tool (16), which is movable in the vertical direction and can be held by a tool holder (14), for the machining of sheet metal workpieces (30), and the tool holder (14) is rotated around its vertical longitudinal axis by a C-drive (32) in the process, **characterized in that** the actuation of the Z-axis drive (12) is carried out as a function of angle information of the C-drive (32).

9. Method according to Claim 8, **characterized in that** from the angle information a Z-setpoint value is determined as a reference variable of the Z-axis drive.

10. Method according to Claim 8 or 9, **characterized in that** the angle information is detected by an angle sensor (40) which is provided on the C-drive (32).

11. Method according to Claim 8, 9 or 10, **characterized in that** the actuation of the Z-axis drive (12) is carried out via a CNC control unit (18) and the angle information forms an input variable of the CNC control unit (18).

12. Method according to one of Claims 8 to 11, **characterized in that** the actuation of the C-drive (32) is carried out via an additional CNC control unit (24) which also actuates an X/Y-axis drive (26, 28) for moving the sheet metal workpieces (30) relative to the tool (16) in horizontal directions.

13. Method according to one of Claims 8 to 12, **characterized in that** a data exchange is carried out between the CNC control unit (18) and the additional CNC control unit (24).

14. Method according to one of Claims 9 to 13, **characterized in that** the CNC control unit (18) determines the Z-setpoint value via a linear or a non-linear transformation of the angle information.

## Revendications

1. Machine à estamper et/ou à grignoter (10), comportant une propulsion d'axe Z (12) pour entraîner un outil (16) mobile dans le sens vertical pouvant être reçu dans un porte-outil (14) et servant à usiner des pièces en tôle (30), une commande CNC (18) pour commander la propulsion d'axe Z (12), le porte-outil (14) pouvant être tourné pendant un mouvement vertical pendant l'usinage de pièces en tôle (30) par une propulsion C (36) commandée par une autre commande CNC (24) autour de son axe longitudinal vertical (34), **caractérisée en ce qu'**il est prévu un capteur d'angle (40) pour détecter l'information angulaire de la propulsion C (32) et que la commande CNC (18) est conçue pour déterminer une valeur théorique Z en tant que paramètre de guidage de la propulsion d'axe Z (12) à partir de l'information angulaire.

2. Machine (10) selon la revendication 1, **caractérisée en ce que** la propulsion C présente un moteur (36), une ligne de transmission (38), une transmission et/ou le porte-outil rotatif (14), le capteur d'angle (40) étant disposé au niveau du moteur (36), de la ligne de transmission (38), de la transmission ou du porte-outil rotatif (14).

3. Machine (10) la revendication 1 ou 2, **caractérisée en ce que** la commande CNC (18) est conçue pour définir la valeur théorique Z par une transformation linéaire ou non linéaire de l'information angulaire.

4. Machine (10) une des revendications précédentes, **caractérisée en ce que** la commande CNC (18) présente une interface avec une commande de niveau supérieur (22) ou avec l'autre commande CNC (24).

5. Machine (10) une des revendications précédentes, **caractérisée en ce que** l'autre commande (24) est également prévue pour commander une propulsion d'axe X/Y (26, 28) pour déplacer les pièces en tôle (30) par rapport à l'outil (16) dans des sens horizontaux (X, Y).

6. Machine (10) une des revendications précédentes, **caractérisée en ce qu'**elle comprend la propulsion d'axe X/Y (26, 28) et l'autre commande CNC (24).

7. Machine (10) une des revendications précédentes, **caractérisée en ce qu'**une propulsion d'axe T pouvant être commandée par l'autre commande CNC (24) est prévue pour sélectionner un outil parmi plusieurs outils d'un magasin ou revolver d'outils.

8. Procédé de commande d'une machine à estamper et/ou à grignoter (10), en particulier d'une machine selon une des revendications précédentes, dans lequel une propulsion d'axe Z (12) permettant d'entraîner un outil (16) mobile dans le sens vertical pouvant être reçu dans un porte-outil (14) est commandée pour usiner des pièces en tôle (30) et le porte-outil (14) est alors tourné autour de son axe longitudinal vertical par une propulsion C (32), **caractérisé en ce que** la commande de la propulsion d'axe Z (12) a lieu en fonction d'une information angulaire de la propulsion C (32).

9. Procédé selon la revendication 8, **caractérisé en ce qu'**une valeur théorique Z est déterminée en tant que paramètre de guidage de la propulsion d'axe Z.

10. Procédé selon la revendication 8 ou 9, **caractérisé en ce que** l'information angulaire est détectée par un capteur d'angle (40) prévu sur la propulsion C (32).

11. Procédé selon la revendication 8, 9 ou 10, **caractérisé en ce que** la commande de la propulsion d'axe Z (12) se fait via une commande CNC (18) et que l'information angulaire constitue un paramètre d'entrée de la commande CNC (18).

12. Procédé selon une des revendications 8 à 11, **caractérisé en ce que** la commande de la propulsion C (32) se fait via une autre commande CNC (24) qui commande aussi une propulsion d'axe X/Y (26, 28) pour déplacer les pièces en tôle (30) par rapport à l'outil (16) dans des sens horizontaux.

13. Procédé selon une des revendications 8 à 12, **caractérisé en ce qu'**un échange de données a lieu entre la commande CNC (18) et l'autre commande CNC (24).

14. Procédé selon une des revendications 9 à 13, **caractérisé en ce que** la commande CNC (18) détermine la valeur théorique Z par une transformation linéaire ou non linéaire de l'information angulaire.
